# EUROPEAN PATENT SPECIFICATION

(11) **EP 2 792 922 B1**
(45) Date of publication and mention of the grant of the patent: **04.01.2017**
(21) Application number: 14164851.9
(22) Date of filing: 16.04.2014
(51) Int. Cl.: F16L 23/02, B23B 27/16, F16L 23/00, B25B 27/16

(54) **A DEVICE AND A METHOD FOR DEMOUNTING A FLANGE CONNECTION**
VORRICHTUNG UND VERFAHREN ZUR DEMONTAGE EINER FLANSCHVERBINDUNG
DISPOSITIF ET PROCÉDÉ DE DÉMONTAGE D'UNE LIAISON À BRIDES

(30) Priority: 17.04.2013 NL 2010648
(43) Date of publication of application: 22.10.2014
(73) Proprietor: Jans, Mark, 1241 VC Kortenhoef (NL)
(72) Inventor: Jans, Mark, 1241 VC Kortenhoef (NL)
(74) Representative: Plaggenborg, Menko Bernard

(56) References cited:
- WO-A1-96/16321
- WO-A1-03/019069
- FR-A3- 2 761 138
- GB-A- 537 942
- GB-A- 826 905

## Description

The present invention relates to a device that can be used when demounting flanges that have been coupled by means of bolts and nuts. The invention also relates to a method for demounting a flange by using the present device.

Such device is new in the art. When demounting flanges from piping, part of the compounds present in said piping will be released through said flanges. Especially when transporting harmful substances, personnel requires protective gear so as to prevent any contact with said substances. Retrieval of any leaked substances is obtained by placing a tray beneath the flange so as to be able to remove said substances, for example through suction. Since such tray usually has a limited capacity, not all substances can be retrieved unless a continuous removal of said substances rom said tray is provided. Anyway, retrieval of gasses is impossible.

From DE202006002457 a device is known that is embodied for closing off a flange so as to prevent leakage to the environment. However, said device is not embodied for actually emptying piping. Only retrieving limited leakage from a flange that is otherwise closed is possible and envisaged.

As a consequence, a solution is required for the problem that substances (more in particular fluids, like liquids and gasses) are lost when demounting flanges.

The present invention aims at providing a device for safely demounting flanges. The invention also aims at providing a method for solving this problem.

The present invention especially aims at providing a device as mentioned in the preamble which enables one to safely demount flanges. The invention especially aims at providing a device as mentioned in the preamble with which personnel does not or substantially not require safety gear.

The invention also aims at providing a device that can be mounted safely and fast on a set of coupled flanges, such that flange bolts can be reached for disconnecting same whereas any substances from said piping can be discarded securely and safely.

In this respect, reference is made to GB826905 and GB537942. In each of them, a device is described that may be used for decou-pling flanges that are coupled by means of flange bolts. An insertion device is provided in said device so as to be able to displace said flanges away from each other. These documents do not provide a solution for the problems mentioned above.

So as to obtain at least one of these goals, according to a first embodiment the present invention provides a device comprising the features of claim 1. This device has the advantage that substances will be shielded from the surrounding. Any contamination of the environment is adequately prevented. The insertion device will ensure an adequate displacement of said flanges. The air intake in the device according to the invention especially ensures an excellent and unrivaled drain of fluids from said piping.-

The advantages of the present invention are especially obtained by the features that the device comprising a housing (6) with an inside (7) that is embodied for adjacent positioning at a radial outer circumference (9) of said coupled flanges (2, 3), the device (1) comprising a connection for removal of fluids that is released from between said flanges (2, 3) and the housing (6) being embodied for being positioned against said coupled flanges (2, 3) while not obstructing said flange bolts (10), and wherein the device (1) further comprises an air intake (25) for supplying air from the surrounding to a space (21) defined by the flanges (2, 3) and the device (1) according to the invention.

According to the invention, an inner part of said housing is embodied to be positioned at a radial outer circumference of said flanges and comprising an insertion device to be inserted between said flanges. The insertion device may be a pen having a sharpened end, such that the pen may be insertable between said flanges so as to move both flanges apart. When said flanges do not move apart automatically when disconnecting said flange bolts, such a pen may provide for such moving apart.

According to the invention, said insertion device has a tapered diameter and is situated within said device while being displaceable between a first position and a second position, such that in a first position part of said insertion device having a smallest diameter is positioned relatively close to the inside of said housing and in a second position is situated relatively further away from the inside of said housing. In said second position the insertion device will be displaced to a position between said flanges, such that the flanges move apart since the insertion device has a tapered diameter. The further the insertion device is displaced, the further the flanges move apart, until a maximum diameter of said insertion device has reached a position between said flanges.

The device is preferably comprised of two semi-circular segments, such that a first segment is positioned against said flanges from a first side and a second segment is positioned against said flanges from a second, opposite side, after which both segments are connected so as to completely seal said flanges from the surrounding. For example, both semi-circular segments may be mutually connected at first ends by means of a hinge whereas both other ends may be connectable by means of mutually cooperating coupling means, preferably disconnectable coupling means.

It is preferred for the device being embodied to be positioned at an axial part of at least one of said flanges, at a position between said radial outer circumference and the flange bolts. This enables the device to be simply centered on a set of coupled flanges, such that de connecting surface or plane of coupling of said flanges, i.e. the plane in which the surfaces of both flanges are positioned adjacently, is shielded adequately by means of said device.

The insertion device has a tapered dimension; the end tip of said insertion device has a smaller diameter than a part of the pen at a position away from said end tip.

So as to obtain a proportional displacement of said flanges around its circumference, it is preferred that said device comprises at least two insertion devices. Optionally, more than two insertion devices may be applied, for example three or even four, so as to move said flanges apart. When the connection for removal of fluids is positioned at a bottom part when using said device, it is preferred that the insertion devices are positioned at a relatively higher position. The insertion devices may also suitably be situated at a bottom half of the flanges. Also optionally, the said connection for removal of fluids, as well as the insertion devices, may be distributed around the devices circumference.

A suitable displacement of said insertion device may be obtained when the insertion device is situated inside an opening of said housing and comprises external thread that cooperates with internal thread inside said opening for enabling said insertion device to be displaced between both positions.

The device provides for an adequate shielding of the environment, or the surroundings in general, with respect to said flanges, when the device can be positioned sealingly against said flanges. To this end, it is preferred for the device to comprise at its inside an elastically deformable material for sealingly positioning said device against said flanges. The said material may be positioned tightly against said flanges so as to obtain said protection. When both flanges are somewhat moved apart any remaining fluid may be simply removed from the space in between said flanges into the connection for removal of fluids. As a matter of fact, the connection should be situated near the flanges' contact surface, so as to enable removal of said fluid.

Within the present invention, the term "contact surface of said flanges" is meant to indicate the plane or the space positioned between said flanges. In practice, a gasket or packing ring will be positioned in between said flanges. When there is mentioning of two flanges positioned against each other, also the situation where a gasket or packing ring is situated in between said flanges is meant as well. Within the present invention, the gasket or packing ring may be provided over the entire flange surface, or over just part of said surface. Such flanges comprising a shoulder, with the consequence that part of said surface is positioned at a distance from the other flange whereas another part of said surface is in contact with said other flange, as in so-called RF flanges, are also embodied by the present invention.

The invention also relates to a device wherein, when using said device, a space is obtained in which fluids that is released from between the flanges can be contained, said space being defined by the inside of said housing, a first deformable material against a first flange, a second deformable material against a second flange and the radial surface of said coupled flanges. According to such embodiment, the device is not tightly contacting the complete radial surface of both flanges, but only part of said surface; or optionally only against the axial surfaces of said flanges.

As a consequence, the invention also relates to a device wherein the elastically deformable material is situated sealingly against the radial surface of said coupled flanges.

According to a further aspect of the present invention, the invention also relates to a method for leak-free demounting flanges using the device according to the present invention. The method comprises the steps of positioning at a radial outer surface of said coupled flanges said housing, such that a separation seem of said flanges is covered by said device, with the proviso that the flange bolts are held freely. It is further preferred that the connection for removal of fluids is connected to a vacuum source or a pump and wherein the air intake provides for an uninterrupted connection between the surrounding and a space defined by the flanges and the device according to the invention. The advantages as mentioned above with regard to the device may be obtained with this method. Preferably, the separation seam of said flanges is sealed from the environment, such that a substantially fluid tight and gas tight seal with respect to the surroundings or environment is obtained. To the connection for removal of fluids a vacuum source or pump or the like is connected, thus creating a reduced pressure in said space near said flanges. According to the present invention an air intake (also identified as air connection) is provided in the device according to the present invention so as to take in air from the environment within the space defined by the device according to the invention and the flanges. As a consequence, fluids will not leak into the environment. Furthermore, it is preferred that the suction means is activated before said flanges are disconnected, thus minimizing the chance of leaking of fluids.

The connection for removal of fluids is situated at a lower position than the air intake, so as to not hinder the removal of fluids through any air entering said space.

The air intake connection may comprise a closeable opening, for example a manually operable or automated valve, but a one way valve may be applied as well, such one way valve allowing air to enter from the surrounding into said space only when a vacuum source is connected to said device for removal of fluid. As a consequence, an excellent removal of fluids is obtained at all times, whereas fluids will not escape through said air intake into the environment.

Preferably, the method according to the invention also comprises the step of coupling a suction means (for example by means of a vacuum tube) to the connection for removal of fluids that is released from between said flanges and disconnecting the flange bolts. Any fluid remaining in the piping will thus be easily, safely and fast be removed, without any contamination of the environment. Personnel disconnecting the flanges needs no or substantially no safety gear.

So as to be able to disconnect stuck and clamping flanges it is preferred for the method according to the invention to further comprise the step of positioning an insertion device between said flanges.

So as to prevent an axial displacement of the device during disconnecting the flange bolts at least partially, it is preferred that the method further comprises the step of positioning at an axial side of the flanges positioning devices for at least partially preventing a axial displacement of the device when disconnecting the flange bolts. These may be pens or the like, that are situated at axial sides of the flanges. They may be situated at some limited distance from the flanges, such that a tolerance of the device over less than or more than a centimeter is obtained. In this respect, it is required for the contact plane of the flanges to remain covered by the device according to the invention.

The device furthermore comprises an air intake so as be able to entrain air from the surrounding within the device or between said flanges so as to prevent evacuation of the piping.

Hereafter, the invention will be explained by means of a drawing. The drawing shows in:
Fig. 1 a schematic view of the device according to the invention and a set of coupled flanges,
Fig. 2 a schematic view of the device according to the invention,
Fig. 3 a sectional view of the device according to the invention positioned around a set of coupled flanges, and
Fig. 4 a sectional view of the device according to the invention comprising an insertion device and an air intake.

In the drawings, the same parts have been denoted by the same reference numerals. However, for ease of understanding the drawing, not all parts that will be required for a practical embodiment of the invention have been denoted and described.

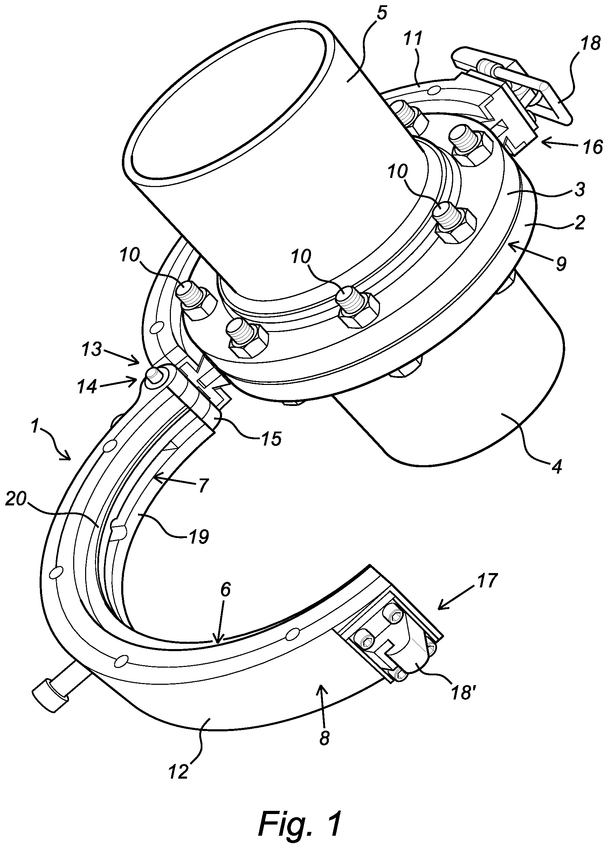

Fig. 1 shows a schematic view of a device 1 in an open state positioned around a set of coupled flanges 2, 3. Said flanges 2, 3 are connected to piping 4 and 5, respectively. Between said flanges 2, 3 a gasket (not shown) is situated so as to provide an adequate sealing. Device 1 comprises a housing 6 having an inside 7 and an outside 8. Said inside 7 is, when in use, positioned against radial outer surface 9 of said flanges 2, 3.

Said flanges are coupled by means of flange bolts 10.

Device 1 is comprised of two mutually cooperating parts 11, 12. Both parts 11, 12 each are shaped as semi-circular segments, such that the device 1 can be easily positioned around a set of coupled flanges 2, 3, as shown in Fig. 1, wherein a first part 11 is positioned against radial outer surface 9 of coupled flanges 2, 3 and said other part 12 is positioned at a distance therefrom. In the embodiment shown, both parts 11, 12 are mutually coupled through a hinge 15 at first ends 13, 14. The other ends 16, 17 are connectable mutually releasably by means of a hook connection 18, 18'.

At its inside 7, device 1 comprises resiliently compressible sealing means 19, 20. These provide for a substantially fluid tight and gas tight seal of the space confined by the radial flange surface 9, sealing means 19, 20 and the inside 7 of the device 1. When the flanges are disconnected, fluid from piping 4, 5 will enter the said space and will not leak to the surrounding. Even if no fluid tight and gas tight seal is obtained, the underpressure inside said space, provided by the suction means, will ensure confinement of said fluids inside said space and that the fluids will not escape to the surroundings. As shown in Fig. 1 the device 1 is constructed such that the flange bolts 10 remain engageable when the device is positioned on a set of coupled flanges.

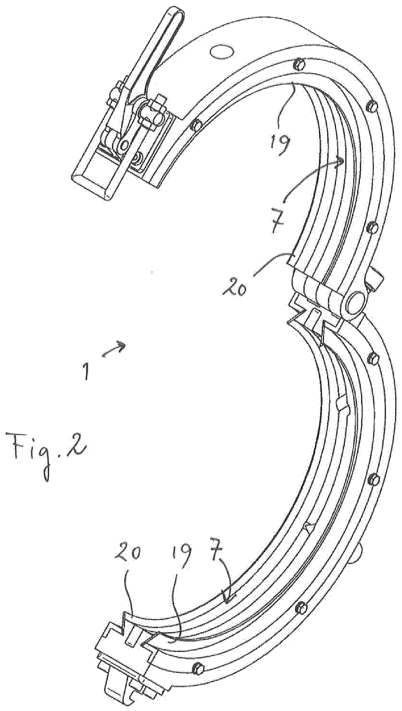

Fig. 2 shows a schematic view of the device 1 without flanges 2, 3 and piping 4, 5.

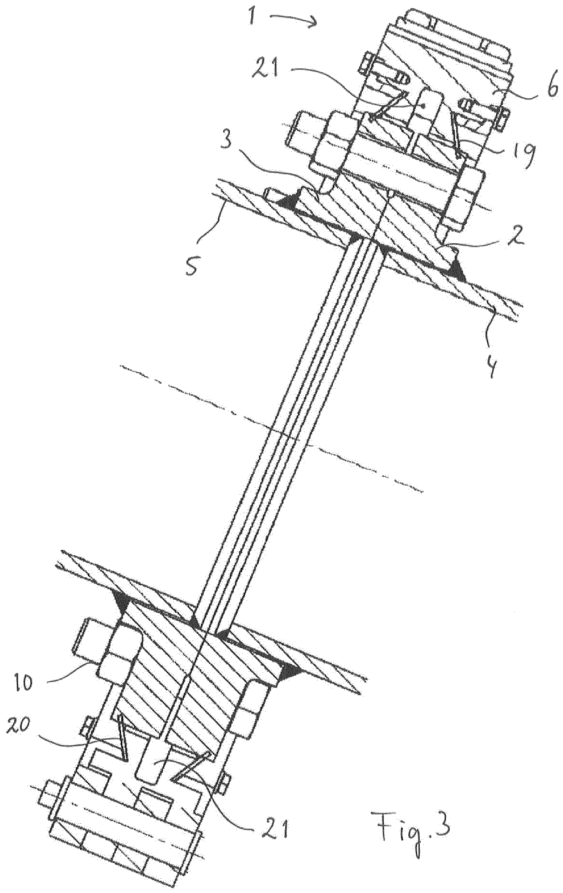

In Fig. 3 a sectional view of device 1 is shown being positioned around a set of coupled flanges 2, 3 with piping 4, 5. Housing 6 constitutes a space 21, together with outer surface 9 of flanges 2, 3 and sealing means 19, 20. In this space 21 fluid from piping 4, 5 may enter, through an opening between flanges 2, 3 when said flanges 2, 3 are moved apart when disconnecting the flange bolts 10. The term "flange bolt" relates to a combination of bolt and nut, as usually applied for mutually coupling two flanges.

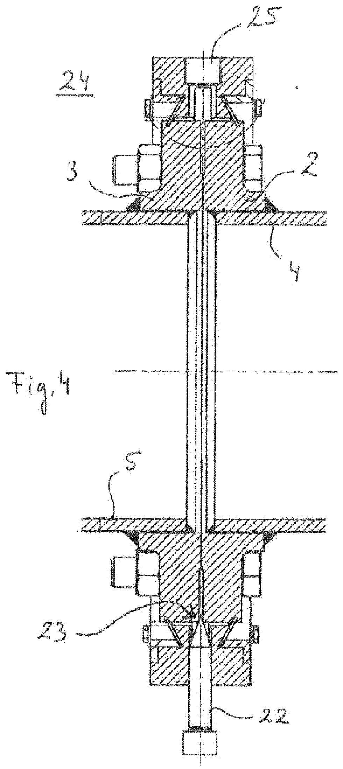

Finally, Fig. 4 shows a sectional view substantially identical to Fig. 3, with the proviso that an insertion device 22 comprising a tapered part 23 is inserted partially in between two flanges 2, 3. In the embodiment shown, the insertion device 22 has outer thread that is embodied to cooperate with inner thread provided at the inside of an opening in device 1, such that turning the insertion device 22 in a first direction provides for a displacement of said insertion device towards the flanges 2, 3. As a consequence, flanges 2, 3 are moved apart when flange bolts 10 are disconnected.

Fluid from piping 4, 5 and from between both flanges 2, 3 will reach the connection through space 23, to which a discharge piping may be connected, said discharge piping for example and preferably being connected to a vacuum source or a pump (not shown) such that all fluids will be removed and stored through said discharge piping, so as to prevent said fluids to end up in the environment. Personnel disconnecting flanges 2, 3 do not need any or substantially no protective gear.

Furthermore, an air intake connection 25 is shown, for having air entering (i.e. aerating) the piping and the space between the device 1 and the flanges, when discharging fluids therefrom. The air intake connection 25 serves as an intake for air towards the space that is confined by the device 1 and the flanges. It has shown that discharge of fluids by using a device according to the present invention is considerably improved when air is taken in from the surrounding through such air intake 25.

The pump or vacuum source may be a separate pump or a vacuum truck, in which the fluids may be stored. Within the present invention, the phrase "vacuum source" should be broadly interpreted and relates to any source that has a lower pressure than the pressure inside the space between the device according to the present invention and the flanges.

The device according to the present invention may comprise a provision for holding a handling member for an insert flange or the like, such that a leak free sealing is obtained so as to prevent any leakage to the environment, even when applying such insert flange.

The invention is not limited to the embodiments as described above and as shown in the drawing. The invention is limited by the claims only.

For example, the device 1 may, over its entire surface or over part of its surface, at its inside be provided with a elastically deformable material, such that the surface between both flanges 2, 3 is covered sealingly. As a consequence, fluids from piping 4, 5 and from between both flanges 2, 3 cannot escape to the environment 24.

Where there is mentioning in the present description of a fluid tight and gas tight sealing between the flanges and the device according to the present invention, a substantially fluid tight and gas tight sealing is meant.

The invention also covers all combinations of features in accordance with the claims that have been described and mentioned independently or in combination within the present description.

## Claims

1. A device (1) four use with demounting flanges (2, 3) that are coupled by means of flange bolts (10), said device comprising a housing (6), an inner part (7) of said housing (6) being embodied to be positioned at a radial outer circumference (9) of said flanges (2, 3) and comprising an insertion device (22) to be inserted between said flanges (2, 3),
said insertion device (22) comprising a tapered diameter (23) and being situated within said device (1) while being displaceable between a first position and a second position, such that in a first position part (23) of said insertion device (22) having a smallest diameter is positioned relatively close to the inside (7) of said housing (6) and in a second position is situated relatively further away from the inside (7) of said housing (6),
**characterized in that**
said device comprising a housing (6) with an inside (7) that is embodied for adjacent positioning at a radial outer circumference (9) of said coupled flanges (2, 3), the device (1) comprising a connection for removal of fluids that is released from between said flanges (2, 3) and the housing (6) being embodied for being positioned against said coupled flanges (2, 3) while not obstructing said flange bolts (10),
wherein the device (1) further comprises an air intake (25) for supplying air from the surrounding to a space (21) defined by the flanges (2, 3) and the device (1) according to the invention.

2. A device (1) according to claim 1, said device (1) being embodied to be positioned at an axial part of at least one of said flanges (2, 3), at a position between said radial outer circumference (9) and the flange bolts (10).

3. A device (1) according to claim 1, the device comprising at least two insertion devices (22).

4. A device (1) according to any of the preceding claims, the insertion device (22) being situated inside an opening of said housing (6) and comprising external thread that cooperates with internal thread inside said opening for enabling said insertion device (22) to be displaced between both positions.

5. A device (1) according to any of the preceding claims, the device (1) comprising at its inside (7) an elastically deformable material (19, 20) for sealingly positioning said device (1) against said flanges (2, 3).

6. A device (1) according to claim 5, wherein, when using said device, a space (21) is obtained in which fluids that is released from between the flanges (2, 3) can be contained, said space (21) being defined by the inside (7) of said housing (6), a first deformable material (19) against a first flange (2), a second deformable material (20) against a second flange (3) and the radial surface (9) of said coupled flanges (2, 3).

7. A device (1) according to claim 5, the elastically deformable material (19, 20) being situated sealingly against the radial surface (9) of said coupled flanges (2, 3).

8. A method for leak-free demounting flanges (2, 3) by using a device (1) according to any of the preceding claims, comprising the step of positioning at a radial outer surface (9) of said coupled flanges (2, 3) said housing (6), such that a separation seem of said flanges (2, 3) is covered by said device (1), with the proviso that the flange bolts (10) are held freely; wherein the connection for removal of fluids is connected to a vacuum source or a pump and wherein the air intake (25) provides for an uninterrupted connection between the surrounding and a space (21) defined by the flanges (2, 3) and the device (1) according to the invention.

9. A method according to claim 8, wherein the connection for removal of fluids is situated at a lower position than the air intake (25).

10. A method according to claim 8 or 9, further comprising the step of coupling a suction means to the connection for removal of fluids that is released from between said flanges (2, 3) and disconnecting the flange bolts (10).

11. A method according to any of claims 8 - 10, further comprising the step of positioning an insertion device (22) between said flanges (2, 3).

12. A method according to any of claims 8 - 11, further comprising the step of positioning at an axial side of the flanges (2, 3) positioning devices for at least partially preventing a axial displacement of the device (1) when disconnecting the flange bolts (10).

## Patentansprüche

1. Einrichtung (1) zur Verwendung bei der Demontage von Flanschen (2, 3), die mittels Flansch-Bolzen (10) gekoppelt sind, worin die Einrichtung umfasst, ein Gehäuse (6), worin ein innerer Teil (7) des Gehäuses (6) ausgestaltet ist, an einem radialen äußeren Umfang (9) der Flanschen (2, 3) angeordnet zu sein und eine Insertions-Einrichtung (22) umfasst, die zwischen die Flanschen (2, 3) inseriert wird, worin die Insertions-Einrichtung (22) einen sich verjüngenden Durchmesser (23) aufweist und in der Einrichtung (1) angeordnet ist, wobei sie zwischen einer ersten Position und einer zweiten Position versetzbar ist, so dass in einer ersten Position ein Teil (23) der Insertions-Einrichtung (22) mit einem kleinsten Durchmesser relativ nahe zu dem Inneren (7) des Gehäuses (6) angeordnet ist und in einer zweiten Position relativ weiter weg von dem Inneren (7) des Gehäuses (6) angeordnet ist,
**dadurch gekennzeichnet, dass**
die Einrichtung ein Gehäuse (6) umfasst, mit einem Inneren (7), das ausgestaltet ist, um an einem radialen äußeren Umfang (9) der gekoppelten Flanschen (2, 3) angeordnet zu werden, worin die Einrichtung (1) eine Verbindung zur Entfernung von Fluiden aufweist, die zwischen den Flanschen (2, 3) freigesetzt werden, und worin das Gehäuse (6) ausgestaltet ist, um gegen die gekoppelten Flanschen (2, 3) angeordnet zu werden, während sie die Flansch-Bolzen (10) nicht behindern,
worin die Einrichtung (1) weiter umfasst, einen Luft-Einlaß (25) zum Zuführen von Luft aus der Umgebung in einen Raum (21), der durch die Flanschen (2, 3) und die Einrichtung (1) gemäß der Erfindung definiert wird.

2. Einrichtung (1) nach Anspruch 1, worin die Einrichtung (1) ausgestaltet ist, an einem axialen Teil mindestens einer der Flanschen (2, 3), an einer Position zwischen dem radialen äußeren Umfang und den Flansch-Bolzen (10) angeordnet zu werden.

3. Einrichtung (1) nach Anspruch 1, worin die Einrichtung mindestens zwei Insertions-Einrichtungen (22) umfasst.

4. Einrichtung (1) nach einem der vorstehenden Ansprüche, worin die Insertions-Einrichtung (22) in einer Öffnung des Gehäuses angeordnet ist und ein Außengewinde umfasst, das mit einem Innengewinde in der Öffnung wechselwirkt, so dass die Insertions-Einrichtung (22) zwischen beiden Positionen versetzt werden kann.

5. Einrichtung (1) nach einem der vorstehenden Ansprüche, worin die Einrichtung an deren Innenseite (7) ein elastisch verformbares Material (19, 20) umfasst, um die Einrichtung gegen die Flanschen (2, 3) dichtend anzuordnen.

6. Einrichtung (1) nach Anspruch 5, worin bei Verwendung der Einrichtung ein Raum (21) erhalten wird, in dem Fluide, die zwischen den Flanschen (2, 3) freigesetzt werden, gesammelt werden können, worin der Raum (21) durch das Innere (7) des Gehäuses, ein erstes verformbares Material (19) gegen eine erste Flansch (2), ein zweites verformbares Material (20) gegen eine zweite Flansch (3) und die radiale Oberfläche (9) der gekoppelten Flanschen (2, 3) definiert wird.

7. Einrichtung (1) nach Anspruch 5, worin das elastisch verformbare Material (19, 20) dichtend gegen die radiale Oberfläche der gekoppelten Flanschen (2, 3) angeordnet ist.

8. Verfahren zur Leckage-freien Abnahme von Flanschen (2, 3) unter Verwendung einer Einrichtung (1) nach einem der vorstehenden Ansprüche, welches den Schritt umfasst, Positionieren des Gehäuses an einer radialen äußeren Oberfläche der gekoppelten Flanschen (2, 3), so das ein Trennungs-Saum der Flanschen (2, 3) von der Einrichtung (1) bedeckt ist, mit der Maßgabe, dass die Flansch-Bolzen (10) frei gehalten werden; wobei die Verbindung zur Entfernung von Fluiden mit einer Unterdruck-Quelle oder einer Pumpe verbunden ist, und worin der Luft-Einlaß (25) eine ununterbrochene Verbindung zwischen der Umgebung und einem Raum (21) sicherstellt, der durch die Flanschen (2, 3) und die Einrichtung (1) gemäß der Erfindung definiert wird.

9. Verfahren nach Anspruch 8, wobei die Verbindung zur Entfernung von Fluiden an einer Position tiefer als der Luft-Einlaß (25) angeordnet ist.

10. Verfahren nach Anspruch 8 oder 9, welches weiter den Schritt umfasst, Kuppeln von Absaugmitteln mit der Verbindung zur Entfernung von Fluiden, die aus zwischen den Flanschen (2, 3) freigesetzt werden, und Auseinandernehmen der Flansch-Bolzen (10).

11. Verfahren nach einem der Ansprüche 8 - 11, welches weiter den Schritt umfasst, Positionieren einer Insertions-Einrichtung (22) zwischen den Flanschen (2, 3).

12. Verfahren nach einem der Ansprüche 8 - 11, welches weiter den Schritt umfasst, Positionieren an einer axialen Seite der Flanschen (2, 3) von Positionierungs-Einrichtungen, um mindestens teileweise eine axiale Versetzung der Einrichtung (1) zu verhindern, wenn die Flansch-Bolzen (10) abgenommen werden.

## Revendications

1. Dispositif (1) pour une utilisation avec des brides de démontage (2, 3) qui sont couplées au moyen de boulons de bride (10), ledit dispositif comprenant un logement (6), une partie interne (7) dudit logement (6) étant incorporée pour être positionnée au niveau d'une circonférence externe radiale (9) desdites brides (2, 3) et comprenant un dispositif d'insertion (22) à insérer entre lesdites brides (2, 3),
ledit dispositif d'insertion (22) comprenant un diamètre effilé (23) et étant situé à l'intérieur dudit dispositif (1) tout en pouvant être déplacé entre une première position et une seconde position, de sorte que, dans une première position, une partie (23) dudit dispositif d'insertion (22) ayant un diamètre plus petit, soit positionnée relativement près de l'intérieur (7) dudit logement (6) et, dans une seconde position, soit située relativement plus loin de l'intérieur (7) dudit logement (6),
**caractérisé en ce que**
ledit dispositif comprend un logement (6) avec un intérieur (7) qui est incorporé pour un positionnement adjacent au niveau d'une circonférence externe radiale (9) desdites brides (2, 3) couplées, le dispositif (1) comprenant un raccord pour l'élimination de fluides qui sont libérés d'entre lesdites brides (2, 3) et le logement (6) étant incorporé pour être positionné contre lesdites brides (2, 3) couplées, sans obstruction desdits boulons de bride (10),
dans lequel le dispositif (1) comprend en outre une entrée d'air (25) permettant de fournir de l'air environnant à un espace (21) défini par les brides (2, 3) et le dispositif (1) selon l'invention.

2. Dispositif (1) selon la revendication 1, ledit dispositif (1) étant incorporé pour être positionné au niveau d'une partie axiale d'au moins l'une desdites brides (2, 3), en une position entre ladite circonférence externe radiale (9) et les boulons de bride (10).

3. Dispositif (1) selon la revendication 1, le dispositif comprenant au moins deux dispositifs d'insertion (22).

4. Dispositif (1) selon l'une quelconque des revendications précédentes, le dispositif d'insertion (22) étant situé à l'intérieur d'une ouverture dudit logement (6) et comprenant un filetage externe qui coopère avec un filetage interne à l'intérieur de ladite ouverture pour permettre le déplacement dudit dispositif d'insertion (22) entre les deux positions.

5. Dispositif (1) selon l'une quelconque des revendications précédentes, le dispositif (1) comprenant au niveau de son intérieur (7) un matériau élastiquement déformable (19, 20) pour un positionnement de façon étanche dudit dispositif (1) contre lesdites brides (2, 3).

6. Dispositif (1) selon la revendication 5, dans lequel, lors de l'utilisation dudit dispositif, un espace (21) est obtenu, espace dans lequel des fluides qui sont libérés d'entre les brides (2, 3) peuvent être contenus, ledit espace (21) étant défini par l'intérieur (7) dudit logement (6), un premier matériau déformable (19) contre une première bride (2), un second matériau déformable (20) contre une seconde bride (3) et la surface radiale (9) desdites brides (2, 3) couplées.

7. Dispositif (1) selon la revendication 5, le matériau élastiquement déformable (19, 20) étant situé de façon étanche contre la surface radiale (9) desdites brides (2, 3) couplées.

8. Procédé pour des brides de démontage antifuite (2, 3) en utilisant un dispositif (1) selon l'une quelconque des revendications précédentes, comprenant l'étape de positionnement au niveau d'une surface externe radiale (9) desdites brides (2, 3) couplées, dudit logement (6), de sorte qu'un joint de séparation desdites brides (2, 3) soit recouvert par ledit dispositif (1), à condition que les boulons de bride (10) soient maintenus libres ; dans lequel le raccord pour l'élimination de fluides est raccordé à une source de vide ou une pompe et dans lequel l'entrée d'air (25) assure un raccord ininterrompu entre l'environnement et un espace (21) défini par les brides (2, 3) et le dispositif (1) selon l'invention.

9. Procédé selon la revendication 8, dans lequel le raccord pour l'élimination de fluides est situé dans une position inférieure à celle de l'entrée d'air (25).

10. Procédé selon la revendication 8 ou 9, comprenant en outre l'étape de couplage d'un moyen d'aspiration au raccord pour l'élimination de fluides qui sont libérés d'entre lesdites brides (2, 3) et de démontage des boulons de bride (10).

11. Procédé selon l'une quelconque des revendications 8 à 10, comprenant en outre l'étape de positionnement d'un dispositif d'insertion (22) entre lesdites brides (2, 3).

12. Procédé selon l'une quelconque des revendications 8 à 11, comprenant en outre l'étape de positionnement au niveau d'un côté axial des brides (2, 3) de dispositifs de positionnement permettant d'empêcher au moins partiellement un déplacement axial du dispositif (1), lors du démontage des boulons de bride (10).
